# EUROPEAN PATENT APPLICATION

(11) **EP 4 109 142 A1**
(43) Date of publication of application: **28.12.2022**
(21) Application number: 21181762.2
(22) Date of filing: 25.06.2021
(51) Int. Cl.: G02B 5/00, G02B 7/182, G02B 7/20, G02B 21/00, G02B 21/36, G02B 23/08, G02B 26/10

(54) **LIGHT SHEET IMAGING DEVICE, SCANNER FOR A LIGHT SHEET IMAGING DEVICE AND METHOD OF OPERATING A LIGHT SHEET IMAGING DEVICE**

(71) Applicant: Friedrich-Alexander-Universität Erlangen-Nürnberg, 91054 Erlangen (DE)
(72) Inventor: FRIEDRICH, Oliver, Erlangen (DE); SCHNEIDEREIT, Dominik, Erlangen (DE); SCHÜRMANN, Sebastian, Erlangen (DE)
(74) Representative: FDST Patentanwälte

(57) **Abstract**

A light sheet imaging device (2) is described, comprising a light source (4), for generating a light beam (6) to illuminate a sample (8), and a scanner (12), for moving the light beam (6) in such a way that a light sheet (14) is generated. The scanner (12) comprises an optical component (18), for shaping the light beam (6). Further, the scanner (12) is configured to move the optical component (18) together with the light beam (6) in such a way that an orientation of the light beam (6) relative to the optical component (18) remains unchanged during operation. In addition, a scanner (12) for a light sheet imaging device (2) is described as well as a method of operating a light sheet imaging device (2).

## Description

A particular embodiment of a light sheet imaging device is a light sheet microscope. Another example of a light sheet imaging device is a light sheet imaging device for macroscopic imaging, e.g., in an engine spray chamber.

A light sheet imaging device is a special type of imaging device in which a sample is viewed in one direction of observation, while a so-called light sheet is guided into the sample laterally and usually perpendicular to said direction of observation for illumination. The light sheet is generated, for example, by means of a cylindrical lens, which focuses a previously expanded light beam asymmetrically, so that a certain expansion remains in one direction and a light sheet is formed accordingly. Alternatively, it is conceivable to deflect a light beam in one direction by means of galvanometric mirrors and thereby generate a light sheet.

Various light sheet imaging devices for microscopy applications are described, for example, in Huisken, Jan, and Didier YR Stainier. "Even fluorescence excitation by multidirectional selective plane illumination microscopy (mSPIM)." Optics letters 32.17 (2007): 2608-2610, Keller, Philipp J., et al. "Reconstruction of zebrafish early embryonic development by scanned light-sheet microscopy." science 322.5904 (2008): 1065-1069, and Zong, Weijian, et al. "Large-field high-resolution two-photon digital scanned light-sheet microscopy." Cell research 25.2 (2015): 254-257.

A light sheet microscope is further described in US 2020/0096754 A1. Optical scanners are described, for example, in EP 0 450 901 A2, US 4,932,732 A1, US 7,345,800 B2 and WO 1998/047036 A1.

In a light sheet imaging device, in particular in a light sheet microscope, it is desirable to generate a light sheet that is as large as possible, or more precisely, a light sheet that is as long as possible in the direction of the light beam and as wide as possible perpendicular to it. In contrast, in a third direction perpendicular to the two aforementioned directions, namely in the direction of observation, the light sheet should be as thin as possible. The larger the light sheet, the larger the regions of a sample that can be examined over a given amount of time.

Against this background, it is a task of the present invention to provide an improved light sheet imaging device, as well as a scanner suitable therefor. Furthermore, a method for operating such a light sheet imaging device is to be provided. In particular, the generation of the light sheet shall be improved.

According to the present invention, the task is solved by a light sheet imaging device with the features according to claim 1, by a scanner with the features according to claim 10 and by a method with the features according to claim 11. Advantageous embodiments, variants and further developments are the subject of the dependent claims. Any explanations in connection with the light sheet imaging device apply *mutatis mutandis* to the scanner as well as to the method and *vice versa.* Insofar as steps of the method are indicated below, advantageous configurations for the light sheet imaging device and the scanner result from these being configured to carry out one or more of these steps. For carrying out one or more steps of the method, the light sheet imaging device preferably comprises a control unit, e.g. a computer. The control unit is, in particular, also used for controlling the scanner.

The light sheet imaging device comprises a light source for generating a light beam to illuminate (in particular expose) a sample. The light beam is guided along a beam path from the light source to the sample. For holding and accommodating the sample, the light sheet imaging device preferably comprises a sample container, which is completely or at least partially transparent for the light beam.

The light sheet imaging device further comprises a scanner for moving the light beam in such a way that a light sheet is generated. The scanner is also referred to as a "scan head". The scanner generally has a movable element, by the movement of which the light beam is moved, e.g. swiveled, in particular in a sideways or lateral direction. Accordingly, the beam path also changes and the light beam is swept through the sample. In other words: a light sheet is generated by sweeping the light beam through the sample using the scanner. In the method for operating the light sheet imaging device, the scanner is accordingly used to move the light beam so that a light sheet is generated. By moving the light beam, a light sheet is generated in particular by temporally stringing together the light beam at different spatial positions, as it were as a bundle of several light beams, i.e. the moving light beam at different positions at different times. In particular, the light beam is moved laterally along an imaginary plane so that the light sheet correspondingly lies in this plane.

The scanner comprises an optical component for shaping the light beam. The optical component is thus integrated into the scanner. The shaping is carried out in particular with the aim of optimally illuminating the sample. Preferably, the optical component is a focusing component, so that the light beam is appropriately focused into the sample, where a particularly high resolution and/or two-photon excitation is then possible. The optical component has an optical axis along which the light beam is preferably guided, i.e. the optical component is aligned along the beam path. Preferably, the optical component is rotationally symmetric with respect to the optical axis. The optical component is arranged in the beam path in front of the sample. Preferably, no further optical components for shaping the light beam are arranged between the optical component and the sample, so that a final shaping of the light beam then takes place with the optical component before the light beam enters the sample. However, at least one wall or window of the sample container between the optical component and the sample itself may be present, as well as a liquid in the sample container if necessary.

The scanner is configured to move the optical component together with the light beam in such a way that during this, i.e. during moving, an orientation of the light beam relative to the optical component remains unchanged, i.e. unchanged while moving or while in operation. In other words, the relative position of the light beam to the optical component remains unchanged during movement and thus during generation of the light sheet. In particular, said orientation of the light beam relative to the optical component is defined by the course of the beam path through space relative to the optical component. The optical component is thus carried along when the light beam is moved and when the light sheet is generated. This has the advantage that the light beam always passes through the optical component in the same way and thus the shaping realized with the optical component is always the same, regardless of the movement of the light beam. This geometry is particularly advantageous for optical components that generate a Bessel- or Airy-type light (e.g., laser) beam profile. In this way, the generation of a particularly large light sheet is possible, because even with a wide movement of the light beam, its optical properties remain the same behind the optical component and thus also within the sample. Overall, the light sheet is advantageously generated by the combination of, on the one hand, the shaping by the optical component and, on the other hand, the movement of the light beam by means of the scanner.

In principle, it is possible to create a light sheet by focusing a light beam asymmetrically using a cylindrical lens or by deflecting a light beam in one direction using one or more galvanometric mirrors. In order to reduce both width and thickness of the light sheet as much as possible, it is possible to use a rigid lens package in the form of a microscope objective for focusing. However, in case of movement of the light beam, said light beam is necessarily deflected away from an optical axis of the lens package. To create light sheets without mechanically moving components but with additional structuring, it is conceivable to use digital spatial light modulators, which are, however, limited in their application due to their digital nature and the limited number of pixels.

A core idea of the present invention is, in particular, a fixed spatial relationship between the light beam and the optical component that shapes the light beam for illuminating the sample. This is realized in the present case by the optical component being part of the scanner and being moved together with the light beam, i.e. being carried along upon movement of the light beam. It is readily apparent, that this concept is *per se* independent of the actual nature of the optical component. However, it is assumed that the optical component is such that moving the light relative to it would deteriorate the light beam's optical properties. Compared to alternative solutions, in which the optical component is fixed relative to the sample, there is initially a disadvantage in that an additional mass must be moved with the optical component. On the other hand, the solution proposed here has the advantage that the light beam can be moved over a wide spatial range without losing its optical properties. Optical properties are understood to mean in particular the spatial dimensions of the light beam and/or its intensity distribution.

The light sheet imaging device is generally used for observing a sample which is placed in a sample container, typically in a cuvette and surrounded by liquid. The light sheet imaging device is constructed such that the sample can be observed with observation optics in a direction of observation. The observation optics are, e.g. a combination of an objective and a camera. To illuminate the sample, the light sheet is guided into the sample laterally with respect to the direction of observation and typically perpendicular thereto. The light beam interacts with the sample so that light is emitted in the direction of observation and captured by the observation optics. Various interactions are possible. In a suitable embodiment, the light sheet imaging device is designed for multi-photon excitation, in particular two-photon excitation, (e.g., two-photon excitation or microscopy using two-photon absorption and subsequent two-photon fluorescence or using second or higher harmonic generation), i.e., the wavelength of light source corresponds to an integer multiple of the wavelength of the light emitted from the sample. Two-photon excitation allows improved light penetration of the sample by utilizing the near-infrared optical window in biological tissues.

Preferably, the light sheet imaging device is a light sheet microscope.

The light sheet is generated by a moving light beam. The light sheet regularly spans a plane, which is then typically perpendicular to the direction of observation. The light sheet thus extends in two directions, namely an x-direction and a y-direction. The x-direction is also called the "beam direction" and corresponds to the direction of the light beam itself. The y-direction is perpendicular to the x-direction, so the light sheet is created by moving the light beam in the y-direction. Finally, the direction of observation is called the z-direction. The x-, y-, and z- directions are preferably perpendicular to each other.

In the z-direction, the light sheet has a thickness which results in particular from the shaping, preferably focusing, by the optical component. In the y-direction, the light sheet has a width that depends on how far the light beam is moved with the scanner. In the x-direction, the light sheet has a length which corresponds in particular to a focus length of the light beam, i.e., over which length the light beam does not exceed a certain diameter. The length is also crucially dependent on the shaping by the optical component. Thickness, width and length of the light sheet are measured using a suitable definition for measuring the extension of a light distribution (either a single light beam or an entire light sheet), e.g. 1-σ standard deviation of the intensity distribution or full-width-at-half-maximum of the intensity distribution. Since the light sheet is composed of the light beam moving with time, the extension of the light sheet is measured by taking into account the light beam at different positions over time.

With the solution presented here, it is possible to generate a particularly large light sheet. In a suitable embodiment, a light sheet is generated whose length and width are larger than a field of view of the observation optics. For example, the observation optics has a field of view of 1.8 mm, then the width and length of the light sheet are at least 1.8 mm each. Thus, the examination of the sample is advantageously no longer limited by the dimension of the light sheet, but by the field of view of the light sheet imaging device. A large light sheet as generated using the invention described here also generally improves imaging with the light sheet imaging device with regard to imaging speed, since scanning of a sample in various directions for e.g. a 3d-video is significantly faster with a larger light sheet. For examining different regions of a sample, the sample is usually translated in the x-, y- and/or z-direction to illuminate different sections at different times. If, however, the light sheet as presented here covers the entire field of view, only a translation of the sample in the z-direction is required to obtain a full 3d-imaged volume.

Preferably, the optical component is configured such that it shapes the light beam into a Bessel beam. With a Bessel beam, a light sheet with a particularly large length can be generated, because a Bessel beam is approximately non-diffractive (an ideal Bessel beam would indeed be non-diffractive), in contrast to a Gaussian beam, for example, which diverges significantly faster with increasing distance. Thus, the ratio of focal length to diameter for a Gaussian beam is typically about 2.5, whereas for a Bessel beam, given otherwise identical conditions, it is about 40,000, i.e., four orders of magnitude larger. A Bessel beam is thus particularly well suited for generating a long yet flat (i.e., small thickness) light sheet. Although a Bessel beam comprises several side lobes, only its central lobe is considered here, as it constitutes the main part of the Bessel beam. In the beam path behind the optical component, there is preferably no further component for shaping the light beam, so that the Bessel beam is not deformed further, but enters the sample as shaped by the optical component.

In a suitable embodiment, the optical component is an axicon. An axicon is characterized in particular by the fact that it converts a Gaussian beam into a Bessel beam. An axicon is a purely passive component, i.e., it does not require any electrical control or the like, and is therefore, particularly easy to move together with the light beam. In particular, the axicon is a transmissive component, similar to a lens, i.e., the light beam enters on one side of the axicon and exits on the other side. This occurs, in particular, with minimal loss in beam intensity, which is advantageous compared to other beam shaping elements which may be used for light sheet generation such as spatial light modulators or ring apertures. In an axicon, it is essential that the light beam runs along the optical axis of the axicon, because only such a configuration ensures optimum shaping of the Bessel beam. If, however, the light beam deviates from the optical axis, the Bessel beam quickly deteriorates and loses its shape and correspondingly, its advantageous optical properties. This typically applies in general to a Bessel beam moving through any other optical component. A Bessel beam is, therefore, typically not well suited for generating large light sheets, since when the light beam is moved by means of a scanner, the light beam may then no longer optimally hit further optical components in the beam path downstream of the scanner. Significant degradation occurs even at small angles of e.g. 1° relative to the optical axis. This problem is here solved by moving the optical component along with the light beam so that the beam always passes through the optical component in the same way, namely along the optical axis of the optical component, in particular with a stationary spatial relationship. Especially in the case of the described use of an axicon, it is thus ensured that an optimal Bessel beam is generated and reaches the sample in its original configuration, regardless of the deflection of the light beam in the y-direction. By moving the optical component along, a particularly wide (i.e. in the y-direction) light sheet can be generated. By ensuring optimal Bessel beam properties, a particularly long (i.e. in the x-direction) and narrow (i.e. in the z-direction) light sheet can be achieved.

From what has been said so far, it is clear that length, thickness and width of the light sheet are typically in conflict with each other. While a Gaussian beam is easily movable relative to an optical component, e.g. a focusing lens, without any significant loss of optical properties, a limitation arises from the given relationship between thickness and length (i.e. diameter and focal length or confocal parameter of the Gaussian beam). For practical purposes, this constraint can be considered absent for a Bessel beam, but its deflection in the y-direction is problematic, resulting in a constraint on the width of the light sheet. By integrating the optical component into the scanner as described here, and thus realizing tracking of the optical component when moving the light beam, the relative alignment (i.e. orientation) of the light beam to the optical component is maintained in every position, so that the restriction with regard to the width of the light sheet is effectively eliminated when using a Bessel beam. A disadvantageous deflection of the light beam away from the optical axis is avoided. However, a Gaussian beam may in principle also be used as a light beam and is also useful in combination with the device described here; the optical component is then expediently a lens for focusing the light beam.

The scanner for moving the light beam together with the optical component is an essential element of the light sheet imaging device presented here, because it is only through the scanner that a deflection of the light beam in the y-direction and thus the generation of the light sheet is realized. In a preferred embodiment, the scanner comprises a rotor which is rotatable about an axis of rotation. Due to the rotation, the generated light sheet is in particular fan-shaped (i.e. in particular has the geometry of a circular segment), the width of the light sheet is then preferably defined as the average width along the length. The rotor is generally a movable part and is driven in particular by a motor, e.g. a brushless motor or a stepper motor. The optical component is attached, in particular fixed, to the rotor so that the optical component is moved along an arc (i.e. circle or part thereof) when the rotor is rotated. Accordingly, the optical component is rotated around the axis of rotation. The axis of rotation is preferably parallel to the direction of observation, but this is not in itself mandatory. The optical component is arranged at a distance from the axis of rotation, the distance being, for example, between 50 mm and 100 mm. The distance from the optical component to the sample and especially to the actual field of view is expediently smaller and is, for example, between 5 mm and 50 mm.

Basically, two variants for the arrangement of the light source are now possible and suitable. In a first variant, the light source is part of the scanner and is also attached to the rotor, i.e. it is also moved during operation of the light sheet imaging device. The light source is then aligned in such a way that the light beam is guided through the optical component to the sample. The light source and the optical component are moved together, so that automatically the orientation of the light beam relative to the optical component remains unchanged during movement. However, depending on the design and in particular the size of the light source, such an integration of the light source into the scanner may not be optimal.

Therefore, in a preferred second variant, the light source is arranged separately to the scanner and is not attached to the rotor. Preferably, the scanner then comprises a deflection element, which is attached to the rotor in particular. Hence, the light beam, which is emitted by the light source, is first guided to the scanner and there specifically to the deflection element and then moved by means of said deflection element by moving the rotor. The deflection element thus forms a virtual light source in the scanner, so to speak, which is moved accordingly when the rotor is rotated. Preferably, the deflection element is a reflector, e.g. a mirror or a prism. The deflection element is also fixed relative to the optical component. This has the advantage that almost any light source can be used and the dimensioning and performance of the scanner is irrelevant when selecting the light source.

The scanner is preferably configured such that the light beam is guided along the axis of rotation to the rotor and then deflected by the deflection element in the direction of the optical component. In other words: the deflection element is suitably arranged along the axis of rotation and deflects the light beam from the axis of rotation in the direction of the optical component. In particular, the optical component is arranged relative to the deflection element in such a way that the optical axis of the optical component meets the axis of rotation of the rotor at the deflection element, so that the deflection element then deflects the light beam from the axis of rotation onto the optical axis. The light beam is then guided from the light source along the axis of rotation into the rotor, where it meets the deflection element, which deflects the light beam accordingly away from the axis of rotation and directs it along the optical axis and thus in the direction of the optical component. To guide the light beam into the rotor, the rotor suitably comprises a hollow shaft through which the light beam enters the rotor and is then guided to the deflection element. In a suitable embodiment, the hollow shaft has an inner diameter in the range from 10 mm to 40 mm; other values are also suitable in principle. In any case, the hollow shaft is dimensioned in such a way that an expanded and collimated light beam can be guided through it. Optionally, the scanner has a tube which is arranged concentrically to the hollow shaft and through which the light beam is guided into the hollow shaft. The tube further has a connection element for connecting the scanner to a cage system or tube system for guiding the light beam from the light source to the scanner.

In a suitable embodiment, the optical component is oriented such that its optical axis is at an angle of 90° to the axis of rotation of the rotor. In other words, the optical component has an optical axis which is perpendicular to the axis of rotation when the rotor is rotated, and in particular also perpendicular to the axis of rotation in general.

In particular, the rotor is rotated at a certain rotational speed during operation, however, the rotational speed's exact value is not relevant here. Preferably, the rotational speed is as high as possible in order to obtain the highest possible temporal resolution of the light sheet imaging device. In principle, a rotational speed in the range of 1 Hz to 100 Hz is suitable. To achieve a rotational speed as large as possible, the rotor is expediently balanced. Since the optical component is not arranged on the axis of rotation, but at some distance therefrom, a counterweight to the optical component is expediently attached to the rotor, namely on an opposite side of the rotor with respect to the axis of rotation. For example, the optical component has a mount for fastening to the rotor, and on the opposite side the same mount is analogously mounted again as a counterweight, and, if necessary, an additional weight is mounted therein. The deflection element is also not necessarily rotationally symmetrical with respect to the axis of rotation, so it is expedient to also balance said deflection element, or attach a correspondingly suitable counterweight to the rotor.

The rotor comprises, for example, a plate on which the optical component and, if present, the deflection element and/or one or more counterweights are mounted. The plate is arranged concentrically to the axis of rotation so that the axis is perpendicular to the plate. The plate preferably has a circular circumference. In the area of the axis of rotation, the plate may have a hole for the light beam to pass through.

For the best possible resolution of the light sheet imaging device, it is desirable that the rotor runs as smoothly as possible during rotation, so that any unwanted deflection is avoided as far as possible. In one useful embodiment, the scanner comprises a holder and a bearing by means of which the rotor is rotatably mounted in the holder. The holder is, for example, C-shaped and then has two arms which embrace the rotor on an upper side and a lower side. Accordingly, the rotor is then rotatably mounted on the two arms. In principle, however, other designs and concepts for mounting the rotor are also conceivable and suitable.

The bearing is preferably formed by two angular contact ball bearings (i.e. the bearing is a duplex angular contact ball bearing) in a back-to-back arrangement. Investigations have shown that such a bearing ensures a running which is sufficiently smooth for a satisfactory operation of the light sheet imaging device. In principle, other types and arrangements of bearings are also conceivable and suitable. However, the configuration explicitly mentioned here ensures a particularly good transmission of axial and radial forces from the rotor to the holder. In a suitable embodiment, the hollow shaft of the rotor is retained in one arm of the holder by means of the two angular contact ball bearings, and the rotor or a component attached thereto further comprises a recess which a motor shaft of the motor engages for driving the rotor, the motor then being attached to the other arm. Thus, the rotor is supported on the lower side by the hollow shaft and on the upper side via the motor shaft (or *vice versa*)*.* In particular, the motor is thereby also attached to the holder. In a suitable embodiment, the rotor comprises a mount which holds the deflection element, e.g. a cage inside which the deflection element is housed, said mount for example being mounted on the plate of the rotor. The recess for the motor shaft is then formed in the mount and opposite to the plate.

The movement of the light beam by means of the scanner can be carried out in various ways to generate a light sheet. In general, the light sheet is preferably generated by rotating the rotor around the axis of rotation. Two suitable variants are conceivable in this case. In a first variant, the rotor is rotated continuously in a single direction so that the optical component revolves on a circular path around the axis of rotation and, accordingly, the light beam is moved in the same direction. However, the sample typically occupies only a very small portion along the circular path so that the light beam travels outside the sample most of the time and correspondingly a large fraction of power of the light source remains unused. For example, a sample holder of 10 mm width (i.e. in the y-direction) holding a sample which is subsequently smaller at a distance of 100 mm from the axis of rotation only appears at an angle of about 0.1 rad (approx. 5.7°). Preference is therefore given to a second variant in which the light sheet is generated by repetitively sweeping the scanner back and forth over a limited angular range. Instead of performing a full rotation again and again, the rotor is only rotated over a certain angular range alternately in one direction and then in the opposite direction, so that the light sheet is generated with the light beam only as a fan, which is narrow in comparison to the full circle and is expediently limited to the sample or even less. Accordingly, the angular range results expediently from the ratio of the diameter of the sample and the distance of the sample to the axis of rotation or is alternatively even smaller and thus limited to a section of the sample. In a suitable embodiment, the angular range is chosen to cover the entire sample or the entire field of view. A suitable limited angular range is between 0.1° and 2° and is, for example, 1°.

In an advantageous embodiment, the same light source is used to illuminate multiple samples at different angles. In a suitable example, a full rotation is performed, e.g., according to the first variant described above, and several samples and corresponding observation optics are placed at different angles, e.g., at position 0°, 90°, 80° and 270°, such that four samples and observation optics are arranged 90° apart from each other. In general, a full or limited angular range is advantageously used for imaging of multiple samples, which are arranged next to each other in a circumferential direction around the axis of rotation, such that each sample is illuminated by a sub-section of the light sheet. This effectively increases sample throughput using or allows multi-user configurations for examining several samples in parallel. This is based on the observation, that a given first sample does not necessarily use the entire light sheet, such that a second sample is advantageously positioned in a section of the light sheet which is not used by the first sample.

Preferably, the light source is a laser and the light beam is a laser beam. The laser beam is advantageously a Gaussian beam. A laser is particularly suitable for light sheet microscopy and enables high resolution when examining the sample. In addition, a laser (particularly a pulsed laser) enables particularly high intensities and thus two-photon excitation. For example, the laser is a continuous-wave laser (CW-laser) or a short-pulse laser, e.g., with a pulse length of at most 100 fs, and with a central wavelength of e.g. 780 nm, although other pulse lengths, e.g., 100 fs +/-50 fs, and other wavelengths are in principle also suitable. However, the specific details of the laser are less important and may vary depending on the application and the sample to be examined. A laser also generally provides a light beam with particularly small dimensions. In a suitable embodiment, the light beam in the sample has a diameter of 1 µm to 5 µm (measured as 1-σ standard deviation of intensity). In front of the optical component, the light beam is preferably expanded to a diameter of several millimeters, e.g. 20 mm, and collimated and is then shaped and focused accordingly by the optical component. To expand the light beam, pre-processing optics in the form of telescopic optics are suitably arranged in the beam path between the light source and the scanner. As an alternative or in addition to the telescopic optics, pre-processing of the light beam in general is also advantageous depending on the circumstances. For this purpose, optional pre-processing optics are arranged in the beam path between the light source and the scanner.

Exemplary embodiments of the invention are described in more detail below and with reference to a drawing comprising several figures, said figures showing schematically:
- Fig. 1: a light sheet imaging device,
- Fig. 2: a light sheet and sample,
- Fig. 3: a scanner in a perspective view,
- Fig. 4: the scanner of Fig. 3 in a half section side view.

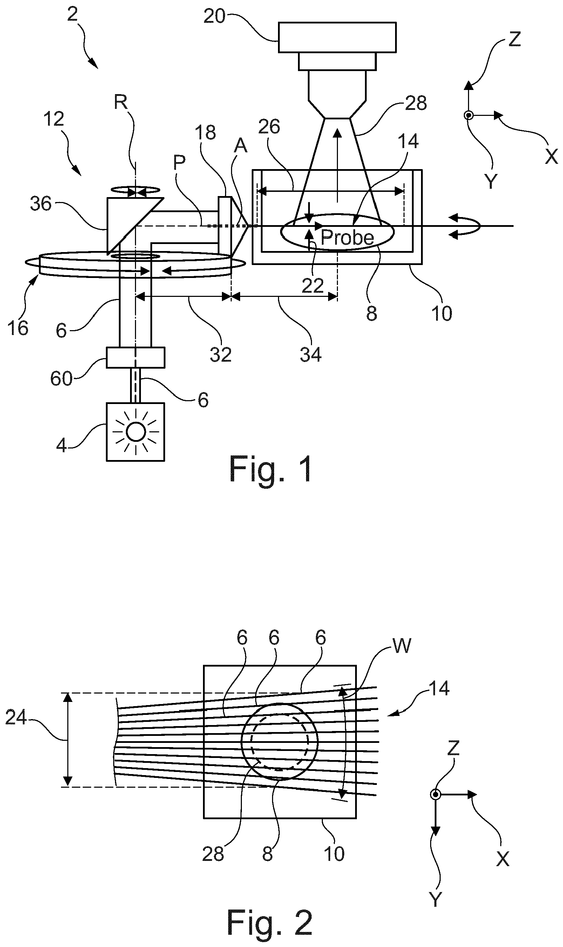

Fig. 1 shows a simplified example of a light sheet imaging device 2, which is here a light sheet microscope. The light sheet imaging device 2 comprises a light source 4 for generating a light beam 6 to illuminate a sample 8. The light beam 6 is guided along a beam path P from the light source 4 to the sample 8. For holding and accommodating the sample 8, the shown light sheet imaging device 2 comprises a sample container 10. The light sheet imaging device 2 further comprises a scanner 12 for moving the light beam 6 in such a way that a light sheet 14 is generated. The scanner 12 generally has a movable element, here a rotor 16, by the movement of which the light beam 6 is moved, e.g. swiveled, in a sideways or lateral direction, in Fig. 1 perpendicular to the drawing plane. Accordingly, the beam path P also changes and the light beam 6 is swept through the sample 8. This is further illustrated in Fig. 2, showing the selected representations of the light beam 6 at different points in time and the sample 8 in a top view along a direction of observation Z.

The scanner 12 comprises an optical component 18 for shaping the light beam 6. The shaping is carried out with the aim of optimally illuminating the sample 8. The optical component 18 has an optical axis A along which the light beam 6 is guided, i.e. the optical component 18 is aligned along the beam path P. In the present case, the optical component 18 is rotationally symmetric with respect to the optical axis A and is also arranged in the beam path P in front of the sample 8. In the shown embodiment, no further optical components for shaping the light beam 6 are arranged between the optical component 18 and the sample 8, so that a final shaping of the light beam 6 then takes place with the optical component 18 before the light beam 6 enters the sample 8 (not counting a wall or window of the sample container 10 as well as a liquid in said sample container 10).

The scanner 12 is configured to move the optical component 18 together with the light beam 6 in such a way that during this, i.e. during moving, an orientation of the light beam 6 relative to the optical component 18 remains unchanged. In other words, the relative position of the light beam 6 to the optical component 18 remains unchanged during movement and thus during generation of the light sheet 14. Said orientation of the light beam 6 relative to the optical component 18 is defined by the course of the beam path P through space relative to the optical component 18. The optical component 18 is thus carried along when the light beam 6 is moved. Overall, the light sheet 14 is then generated by the combination of, on the one hand, the shaping by the optical component 18 and, on the other hand, the movement of the light beam 6 by means of the scanner 12. A fixed spatial relationship is maintained between the light beam 6 and the optical component 18.

The light sheet imaging device 2 is constructed such that the sample 8 can be observed with observation optics 20 in the direction of observation Z. The observation optics 20 are, e.g. a combination of an objective and a camera. To illuminate the sample 8, the light sheet 14 is guided into the sample 8 laterally with respect to the direction of observation Z and here specifically perpendicular thereto. The light beam 6 interacts with the sample 8 so that light is emitted in the direction of observation Z and captured by the observation optics 20. Various interactions are possible, e.g. two-photon microscopy using two-photon absorption and subsequent two-photon fluorescence or using second or higher harmonics generation.

The light sheet 14 is generated by the moving light beam 6. The light sheet 14 regularly spans a plane, which is typically perpendicular to the direction of observation Z. The light sheet 14 further extends in two directions, namely an x-direction X and a y-direction Y. The x-direction X is also called the "beam direction" and corresponds to the direction of the light beam 6 itself. The y-direction Y is perpendicular to the x-direction X (in one embodiment following an arc tangential segment of the rotational movement), so the light sheet 14 is created by moving the light beam 6 in the y-direction Y. Finally, the direction of observation Z is called the z-direction Z. In the present case, the x-, y-, and z- directions X, Y, Z are perpendicular to each other. More precisely, the XY plane and z-direction Z are perpendicular.

In the z-direction Z, the light sheet 14 has a thickness 22 that results from the shaping by the optical component 18. In the y-direction Y, the light sheet 14 has a width 24 that depends on how far the light beam 6 is moved with the scanner 12. In the x-direction X, the light sheet 14 has a length 26 which corresponds to a focus length of the light beam 6, i.e., over which length the light beam 6 does not exceed a certain diameter. The length is also dependent on the shaping by the optical component 18. In the shown embodiment, a light sheet 14 is generated whose length 26 and width 24 are larger than the field of view 28 of the observation optics 20.

The optical component 18 of the shown embodiment is configured such that it shapes the light beam 6 into a Bessel beam. With a Bessel beam, a light sheet 14 with a large length 26 can be generated, because a Bessel beam is largely non-diffractive, in contrast to a Gaussian beam, for example, which diverges significantly faster with increasing distance. The length 26 in Fig. 1 is purely illustrative, in fact, however, the length 26 is usually significantly larger for a Bessel beam. Specifically, the optical component 18 shown here is an axicon, which converts a Gaussian beam into a Bessel beam. The axicon is a purely passive component and is also a transmissive component. In an axicon, it is essential that the light beam 6 runs along the optical axis A of the axicon, because only such a configuration ensures optimum shaping of the Bessel beam. If, however, the light beam 6 deviates from the optical axis A, the Bessel beam quickly deteriorates and loses its shape and correspondingly, its advantageous properties. Deviation from the optical axis A upon moving the light beam 6 is avoided by moving the optical component 18 along with the light beam 6 so that the light beam 6 always passes through the optical component 18 in the same way, namely along the optical axis A. It is thus ensured that an optimal Bessel beam is generated and reaches the sample 8 in its original configuration, regardless of the deflection of the light beam 6 in the y-direction Y. By integrating the optical component 18 into the scanner 12, a tracking of the optical component 18 when moving the light beam 6 is realized, and the relative alignment of the light beam 6 to the optical component 18 is maintained in every position. In an alternative not explicitly shown configuration, a Gaussian beam is used as a light beam 6 along the entire light path P and into the sample 8. Similarly, in an alternative not explicitly shown configuration, the optical component 18 may be a focusing lens.

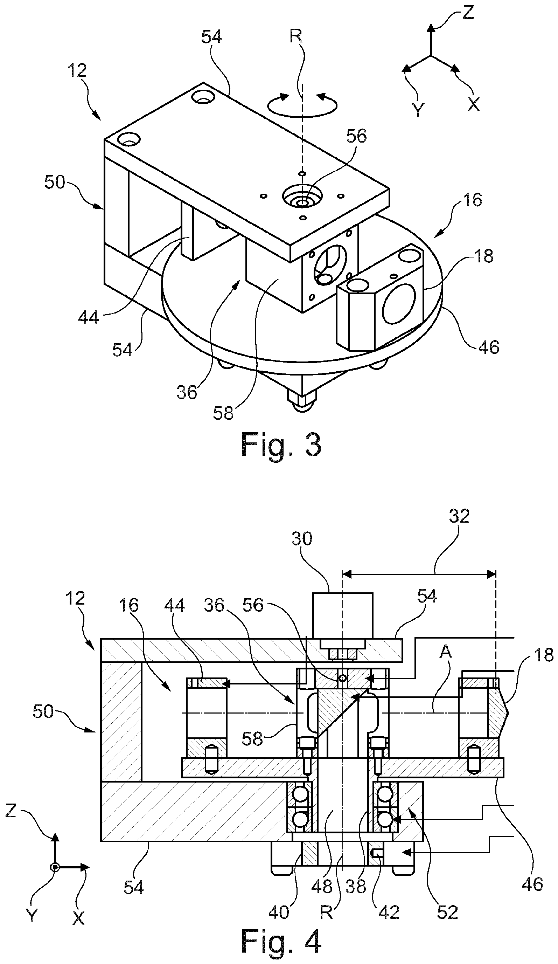

Fig. 3 shows a possible embodiment of the scanner 12 in a perspective view and Fig. 4 shows the same scanner 12 in a half section side view. In the embodiment shown here and as already hinted above, the scanner 12 comprises a rotor 16 which is rotatable about an axis of rotation R. Due to the rotation, the generated light sheet 14 is fan-shaped, as is visible in Fig. 2, in which the fan shape is shown significantly exaggerated. The rotor 16 is generally a movable part and is driven by a motor 30, not explicitly shown in Fig. 3 but schematically indicated in Fig. 4. The optical component 18 is attached to the rotor 16 so that the optical component 18 is moved along an arc when the rotor 16 is rotated. Accordingly, the optical component 18 is rotated around the axis of rotation R. The axis of rotation R is here parallel to the direction of observation Z, but this is not in itself mandatory. The optical component 18 is arranged at a distance 32 from the axis of rotation R. The distance 34 from the optical component 18 to the sample 8 and especially to the actual field of view 28 is smaller in comparison (in Fig. 1 the size of the container 10 and sample 8 are exaggerated relative to the scanner 12, such that the distance 34 is exaggerated relative to the distance 32).

Basically, two variants for the arrangement of the light source 4 are possible and suitable. In a first variant not explicitly shown, the light source 4 is part of the scanner 12 and is also attached to the rotor 16, i.e. it is also moved during operation of the light sheet imaging device 2. The light source 4 and the optical component 18 are moved together, so that automatically the orientation of the light beam 6 relative to the optical component 18 remains unchanged during movement. In a second variant, an example of which is shown in the figures, the light source 4 is arranged separately to the scanner 12 and is not attached to the rotor 16. Positioning of the light source 4 is arbitrary, as long the light beam 6 is suitably guided to the scanner 12. The scanner 12 then comprises a deflection element 36, which is attached to the rotor 16. Hence, the light beam 6 is first guided to the scanner 12 and there to the deflection element 36 and then moved by means of said deflection element 36 by moving the rotor 16. The deflection element 36 thus forms a virtual light source in the scanner 12, so to speak, which is moved accordingly when the rotor 16 is rotated. In the present case, the deflection element 36 is a reflector, e.g. a mirror or a prism and is also fixed relative to the optical component 18.

The scanner 12 as shown in detail in Figs. 3 and 4 is configured such that the light beam 6 is guided along the axis of rotation R to the rotor 16 and then deflected by the deflection element 36 in the direction of the optical component 18. The optical component 18 is arranged relative to the deflection element 36 in such a way that the optical axis A meets the axis of rotation R at the deflection element 36. The light beam 6 is then guided from the light source 4 along the axis of rotation R into the rotor 16, where it meets the deflection element 36, which deflects the light beam 6 accordingly away from the axis of rotation R and directs it along the optical axis A and thus in the direction of the optical component 18. In the present embodiment, the optical component 18 is oriented such that the optical axis A is perpendicular to the axis of rotation R.

To guide the light beam 6 into the rotor 16, said rotor 16 comprises a hollow shaft 38 through which the light beam 6 enters the rotor 16 and is then guided to the deflection element 36. The hollow shaft 38 is dimensioned in such a way that an expanded and collimated light beam 6 can be guided through it. Optionally, the scanner 12 has a tube 40 which is arranged concentrically to the hollow shaft 38 and through which the light beam 6 is guided into the hollow shaft 38. The tube 40 further has a connection element 42 for connecting the scanner 12 to a cage system or tube system for guiding the light beam 6 from the light source 4 to the scanner 12.

The rotor 16 is rotated at a certain rotational speed during operation, however, the rotational speed's exact value is not relevant here. To HzHIn order to achieve a rotational speed as large as possible, the rotor 16 is balanced. Since the optical component 18 is not arranged on the axis of rotation R, but at some distance 32 therefrom, a counterweight 44 to the optical component 18 is attached to the rotor 16, namely on an opposite side of the rotor 16 with respect to the axis of rotation R. The deflection element 36 is also not necessarily rotationally symmetrical with respect to the axis of rotation R, so it is also balanced or a correspondingly suitable counterweight is attached to the rotor 16.

The rotor 16 shown here comprises a plate 46 on which the optical component 18, the deflection element 36 and the counterweight 44 are mounted. The plate 46 is arranged concentrically to the axis of rotation R and perpendicular thereto. The plate 46 has a circular circumference and a hole 48 in the area of the axis of rotation R and in flush arrangement with the hollow shaft 38 for the light beam 6 to pass through.

Further, in the shown embodiment, the scanner 12 comprises a holder 50 and a bearing 52 by means of which the rotor 16 is rotatably mounted in the holder 50. The bearing 52 is here formed by two angular contact ball bearings in a back-to-back arrangement. The holder 50 is, for example, C-shaped and then has two arms 54 which embrace the rotor 16 on an upper side and a lower side. Accordingly, the rotor 16 is then rotatably mounted on the two arms 54. The hollow shaft 38 of the rotor 16 is retained in one arm 52 of the holder 50 by means of the bearing 52, and the rotor 16 further comprises a recess 56 which a motor shaft of the motor 30 engages, the motor 30 then being attached to the other arm 54. Thus, the rotor 16 is supported on the lower side by the hollow shaft 38 and on the upper side via the motor shaft. Here, the rotor 16 comprises a mount 58 (e.g. a cage) which holds the deflection element 36. Said mount 58 is mounted on the plate 46. The recess 56 for the motor shaft is then formed in the mount 58 and opposite to the plate 46.

The movement of the light beam 6 by means of the scanner 12 can be carried out in various ways to generate a light sheet 14. In general, the light sheet 14 is generated by rotating the rotor 16 around the axis of rotation R. Two suitable variants are conceivable in this case. In a first variant, the rotor 16 is rotated continuously in a single direction so that the optical component 18 revolves on a circular path around the axis of rotation R and, accordingly, the light beam 6 is moved in the same direction. However, preference is given to a second variant in which the light sheet 14 is generated by repetitively sweeping the scanner 12 back and forth over a limited angular range W, as indicated in Fig. 2. Instead of performing a full rotation again and again, the rotor 16 is only rotated over a certain angular range W alternately in one direction and then in the opposite direction, so that the light sheet 14 is generated with the light beam 6 only as a fan, which is narrow in comparison to the full circle and is e.g. limited to the sample 8.

In the embodiment shown here, the light source 4 is a laser and the light beam 6 is a laser beam. In front of the optical component 18, the light beam 6 is optionally expanded and collimated to a diameter of several millimeters and is then shaped and focused accordingly by the optical component 18. To expand the light beam 6, pre-processing optics 60, here telescopic optics, are arranged in the beam path P between the light source 4 and the scanner 12. As an alternative or in addition to the telescopic optics, pre-processing of the light beam 6 in general is performed by pre-processing optics 60 which are arranged in the beam path P between the light source 4 and the scanner 12.

### List of reference signs

- 2: light sheet imaging device
- 4: light source
- 6: light beam
- 8: sample
- 10: sample container
- 12: scanner
- 14: light sheet
- 16: rotor
- 18: optical component
- 20: observation optics
- 22: thickness
- 24: width
- 26: length
- 28: field of view
- 30: motor
- 32: distance (from optical component to axis of rotation)
- 34: distance (from optical component to sample)
- 36: deflection element
- 38: hollow shaft
- 40: tube
- 42: connection element
- 44: counterweight
- 46: plate
- 48: hole
- 50: holder
- 52: bearing
- 54: arm
- 56: recess
- 58: mount
- 60: pre-processing optics
- A: optical axis
- P: beam path
- R: axis of rotation
- W: angular range
- X: x-direction, beam direction
- Y: y-direction
- Z: z-direction, direction of observation

## Claims

1. Light sheet imaging device (2), comprising:
- a light source (4), for generating a light beam (6) to illuminate a sample (8),
- a scanner (12), for moving the light beam (6) in such a way that a light sheet (14) is generated;
wherein the scanner (12) comprises an optical component (18), for shaping the light beam (6),
wherein the scanner (12) is configured to move the optical component (18) together with the light beam (6) in such a way that an orientation of the light beam (6) relative to the optical component (18) remains unchanged.

2. Light sheet imaging device (2) according to claim 1,
wherein the optical component (18) is configured such that it shapes the light beam (6) into a Bessel beam.

3. Light sheet imaging device (2) according to any one of claims 1 or 2,
wherein the optical component (18) is an axicon.

4. Light sheet imaging device (2) according to any one of claims 1 to 3,
wherein the scanner (12) comprises a rotor (16) which is rotatable about an axis of rotation (R),
wherein the optical component (18) is attached to the rotor (16) so that the optical component (18) is moved along an arc when the rotor (16) is rotated.

5. Light sheet imaging device (2) according to claim 4,
wherein the scanner (12) comprises a deflection element (36) and is configured such that the light beam (6) is guided along the axis of rotation (R) to the rotor (16) and then deflected by the deflection element (36) in the direction of the optical component (18).

6. Light sheet imaging device (2) according to claim 5,
wherein the deflection element (36) is a reflector which is arranged along the axis of rotation (R) and deflects the light beam (6) from the axis of rotation (R) into the direction of the optical component (18).

7. Light sheet imaging device (2) according to any one of claims 4 to 6,
wherein the optical component (18) has an optical axis (A) which is perpendicular to the axis of rotation (R).

8. Light sheet imaging device (2) according to any one of claims 4 to 7,
wherein the scanner (12) comprises a holder (50) and a bearing (52) by means of which the rotor (16) is rotatably mounted in the holder (50),
wherein the bearing (52) is formed by two angular contact ball bearings in a back-to-back arrangement.

9. Light sheet imaging device (2) according to any one of claims 1 to 8,
wherein the light source (4) is a laser and the light beam (6) is a laser beam.

10. Scanner (12) for a light sheet imaging device (2) according to any one of claims 1 to 9.

11. Method of operating a light sheet imaging device (2) according to any one of claims 1 to 9, wherein the light beam (6) is moved with the scanner (12) so that a light sheet (14) is generated.

12. Method according to claim 11,
wherein the light sheet (14) is generated by repetitively sweeping the scanner (12) back and forth over a limited angular range (W).
